## Europäisches Patentamt
## European Patent Office
## Office européen des brevets

(11) Numéro de publication: **0 017 624**
**B1**

(12) **FASCICULE DE BREVET EUROPEEN**

(45) Date de publication du fascicule du brevet:
06.06.84

(21) Numéro de dépôt: 80810111.7

(22) Date de dépôt: 02.04.80

(51) Int. Cl.³: **C 08 L 51/06**, C 09 D 3/00, H 01 B 3/46, H 01 B 3/30, H 01 B 3/14, B 29 F 3/00, B 29 F 3/08

(54) Procédé de fabrication d'un conducteur électrique, isolé par un revêtement en matière plastique réticulée, et conducteur électrique isolé obtenu selon le procédé.

(30) Priorité: 03.04.79 CH 3101/79

(43) Date de publication de la demande:
15.10.80 Bulletin 80/21

(45) Mention de la délivrance du brevet:
06.06.84 Bulletin 84/23

(84) Etats contractants désignés:
AT BE CH DE FR GB IT LI LU NL SE

(56) Documents cités:
DE - A - 2 350 876
DE - A - 2 419 209
DE - A - 2 419 210
FR - A - 2 217 362
FR - A - 2 303 358
GB - A - 2 002 395

(73) Titulaire: Maillefer S.A., Route du Bois,
CH-1024 Ecublens Canton de Vaud (CH)

(72) Inventeur: Hochstrasser, Ulrich, Chemin Dent-d'Oche 8,
CH-1024 Ecublens (Vaud) (CH)
Inventeur: Kertscher, Eberhard, Chemin du Brit 21,
CH-1032 Romanel-sur-Lausanne (Vaud) (CH)

(74) Mandataire: Rochat, Daniel Jean et al, Bovard SA
Ingénieurs-conseils ACP Optingenstrasse 16,
CH-3000 Bern 25 (CH)

## Description

Depuis plusiers années, la technique de fabrication des câbles électriques isolés destinés à conduire des courants sous haute ou basse tension, évolue rapidement. Cette évolution se marque également dans la fabrication de certains types de tuyaux qui sont formés de matières synthétiques analogues à celles utilisées pour constituer la gaine isolante des câbles.

Selon la demande de brevet allemande DOS 2 350 876 il est connu de faire réagir certains polymères comme des copolymères d'éthylène et d'acétate de vinyle ou d'autres oléfines avec un silane, en présence d'un générateur de radicaux libres, puis d'exposer ce produit, contenant encore différents additifs à de l'eau pour provoquer la réticulation du polymère. Ces matières peuvent être mises en forme par une opération d'extrusion, qui est suivie d'un traitement en présence d'eau bouillante ou à une température de 50 à 80°C.

La demande de brevet FR 2 217 362, et les demandes de brevets allemandes DOS 2 419 209 et 2 419 210 concernent aussi des procédés et des produits du même genre.

Selon le brevet GB 2 002 395, on peut produire des câbles électriques isolés par un revêtement d'élastomère réticulable en présence d'humidité en procédant à l'opération de réticulation dans une enceinte contenant de la vapeur d'eau sous pression à une température entre 150 et 200°C environ. Un procédé du même genre est décrit également dans la demande de brevet FR 2 297 713.

Ces procédés connus de l'art antérieur comportent en général trois étapes: Au cours de la première, on effectue le mélange du silane liquide avec le polymère ou le copolymère qui forme le constituant principal de la matière à extruder. Ce mélange n'est mis en présence des autres additifs qu'au moment de l'opération d'extrusion, laquelle est suivie de l'opération de réticulation.

Certains inconvénients de ces méthodes antérieures on pu être éliminés grâce à une technique qui est décrite notamment dans le brevet anglais 1 526 398 et selon laquelle le processus en trois étapes décrit est remplacé par un processus en deux étapes.

Du polyéthylène non copolymérisé et les additifs nécessaires sont tous introduits séparément à l'entrée d'une extrudeuse à vis dans laquelle le mélange, le malaxage et l'homogénéisation des produits sont réalisés activement de manière à produire la matière à extruder directement à la sortie de l'extrudeuse.

La seconde étape du procédé est représentée par la réticulation de la matière mise en forme. Celle-ci constitue le revêtement isolant d'un câble ou un tube. Dans le procédé du brevet anglais 1 526 398, la réticulation est effectuée par exemple par un traitement dans l'eau bouillante.

Le brevet anglais susmentionné indique que le procédé décrit s'applique de façon générale à d'autres polymères que les polyéthylènes cités en exemples, et s'étend à une large gamme de copolymères d'oléfines.

Le but de la présente invention est de perfectionner encore le procédé décrit dans le brevet anglais précité. On a constaté en effet que la réduction à deux des étapes du procédé permettait d'accélérer notablement la fabrication de câbles électriques ou de tubes. Toutefois, la nécessité d'un traitement de réticulation d'une durée de plusieurs heures dans une piscine contenant de l'eau bouillante ou à une température de l'ordre de 95°C, constituait une servitude d'autant plus gênante que la vitesse de la première étape du procédé était plus grande. En effet, les investissements nécessaires pour l'installation et le maintien en service des piscines contenant l'eau à la température requise ne permettaient pas d'abaisser autant que cela était désirable les coûts de production.

Certes, il était possible d'effectuer la réticulation en atmosphère humide à la température ambiante, mais la durée de cette opération atteignait trois semaines ou plus.

La présente invention a donc pour but de remédier à cet inconvénient du procédé selon le brevet anglais 1 526 398 en créant un procédé perfectionné dans lequel la réticulation peut être effectuée en atmosphère humide, en quelques jours seulement.

Dans ce but, la présente invention a pour objet un procédé de fabrication d'un élément tubulaire en matière plastique réticulée, notamment d'un revêtement isolant de conducteur électrique, comprenant l'alimentation d'une extrudeuse à vis divisée en une zone de chauffage, une zone de plastification et une zone d'homogénéisation, avec un polymère susceptible de se réticuler sous l'action d'un silane hydrolysable non saturé, et avec des additifs en quantité dosée, notamment le silane hydrolysable non saturé, ce dernier étant introduit séparément dans l'extrudeuse, un générateur de radicaux libres et un catalyseur de la condensation du silanol, l'élaboration d'une masse homogène par brassage actif des dites matières dans l'extrudeuse, l'extrusion de ladite matière homogénéisée et la réticulation du produit extrudé en présence d'humidité, caractérisé en ce que les additifs comprennent un agent de réduction du taux de cristallisation du polymère et en ce que la réticulation est effectuée dans une atmosphère d'air humide.

Elle a également pour objet l'élément tubulaire obtenu selon le procédé.

Cette invention repose sur la constatation inattendue que certains additifs connus que l'on peut incorporer au polymère en quantité dosée, jouent le rôle d'un agent de réduction du taux de cristallisation du polymère et confèrent au produit extrudé une perméabilité à l'eau qui est suffisante pour que l'humidité atmosphérique permette à la réticulation de se développer à une vitesse telle que le câble ou le tube corresponde aux prescriptions usuelles après un temps de stockage relativement très court, à condition que la température ambiante soit de 20° C ou plus et que l'humidité relative atteigne au moins 60%.

Ce procédé permet donc d'effectuer l'isolation de câbles électriques ou de fabriquer des tubes en matière plastique réticulée par exemple dans des pays à climat chaud et humide en stockant à l'air libre les bobines que l'on forme à la suite de l'opération d'extrusion. On a constaté que dans les conditions indiquées ci-dessus, on obtenait un taux de réticulation suffisant pour que le câble corresponde aux prescriptions de l'IEC (International Electric Committee) après 96 h de stockage. S'il s'agit de satisfaire à des prescriptions plus sévères comme celles que connaissent certains pays, la durée du stockage doit être augmentée en proportion mais on a constaté qu'un stockage de 12 jours permettait de satisfaire aux prescriptions les plus sévères.

On va décrire ci-après, à titre d'exemple, une forme de mise en oeuvre du procédé.

Un câble électrique formé de fils de cuivre et destiné à conduire du courant sous une tension de 1 kV a été pourvu d'un revêtement isolant par passage dans une tête d'extrusion fixée à l'extrémité aval du cylindre d'une extrudeuse. Il s'agissait d'une extrudeuse à trois zones comprenant une zone de chauffage, une zone de plastification et une zone d'homogénéisation, cette extrudeuse étant du genre décrit par exemple dans le brevet anglais 1 526 398. Rappelons que la vis de l'extrudeuse comportera de préférence plusieurs zones dans lesquelles la constituion des filets diffère. Dans la zone de plastification, la vis comporte avantageusement deux filets intercalés l'un à l'autre et présentant des pas différents de manière à délimiter deux canaux, dont un canal de section décroissante à partir duquel la matière est forcée par dessus un des filets pour pénétrer dans le second canal dont la section est progressivement croissante. Un tel angencement mélange de façon tout à fait homogène des matières différentes introduites dans la trémie de l'extrudeuse et comportant par exemple des constituants sous forme de poudre ou de granules et des constituants liquides. Dans la trémie de l'extrudeuse, on introduit du polyethylène en poudre ou en granule et divers additifs notamment un silane hydrolysable non saturé (ce dernier étant introduit séparément dans l'extrudeuse), un générateur de radicaux libres et un catalyseur de la condensation du silanol, ces additifs étant prévus en proportion suffisante pour provoquer ultérieurement la réticulation du polyéthylène en présence d'eau.

Un agent de réduction du taux de cristallisation est introduit dans le polymère au préalable. Ainsi, dans l'exemple décrit, on a produit par un traitement antérieur une poudre ou un granulé de polyéthylène dont les particules comprenaient de l'acétate de vinyle dans une proportion de 6% en poids.

Le tableau ci-après donne un exemple des matières qui sont introduites dans l'extrudeuse. Les proportions sont indiquées en %, en poids par rapport au poids total de polyéthylène et d'acétate de vinyle:

| | |
|---|---|
| noir de charbon | 10% |
| péroxyde de dicumyle | 0,1% |
| vinyltri-méthoxy-silane | 1,5% |
| tri-méthyl-di-hydro-quinoléine polymérisée | 0,5% |
| dilaurate de dibutyl-étain | 0,05% |

Après élaboration dans l'extrudeuse, ces matières sont extrudées dans une tête transversale traversée par le conducteur.

Après l'opération d'extrusion qui s'est déroulée dans des conditions normales et après le refroidissement du câble réalisé par passage dans un bac d'eau, le câble enroulé sur des bobines standard a été stocké à température ambiante dans une atmosphère où l'humidité relative était de 60% et la température de 20° C.

On a pu constater qu'après 96 h de stockage, la réticulation avait eu lieu et que le taux de réticulation de l'isolant correspondait aux prescriptions de l'IEC pour les câbles à basse tension.

La proportion d'acétate de vinyle dans le mélange introduit dans l'extrudeuse peut varier dans des limites assez larges, par exemple de 0,5 à 30%. Il est toutefois préférable de ne pas dépasser 15% et les proportions avantageuses sont de 2 à 10%.

Au lieu de l'acétate de vinyle, on peut également utiliser un acétate de polyvinyle, l'acrylate de vinyle, un acrylate de polyvinyle ou l'acrylate de butyle.

Ces produits agissent sur le polymère en diminuant son taux de cristallisation au cours du refroidissement. Toutefois, dans les limites mentionnées, ils sont sans influence défavorable sur les qualités diélectriques et mécaniques de l'isolant, de sorte que ce dernier satisfait pleinement aux conditions d'isolation requises. En ce qui concerne la résistance mécanique, on a même constaté que la résistance à la rupture sous contrainte était augmentée lorsque l'agent de réduction du taux de cristallisation du polymère agissant sur ce dernier était l'acétate de polyvinyle.

Du fait du ralentissement du processus de cristallisation, l'eau pénètre en profondeur dans le revêtement isolant, même si celui-ci est épais. La rédaction du silane avec la polyoléfine et avec l'eau se produit donc en profondeur plus rapidement que lorsque la cristallisation s'opère normalement.

Au lieu d'instroduire l'agent de réduction du taux de cristallisation séparément ou incorporé au polymère dans la trémie de l'extrudeuse, on peut également l'introduire par injection dans le cylindre de l'extrudeuse par une canalisation raccordée à un orifice d'entrée pratiqué dans ce cylindre selon l'enseignement du brevet CH 591 946.

## Revendications

1. Procédé de fabrication d'un élément tubulaire en matière plastique réticulée, notamment d'un revêtement isolant de conducteur électrique, comprenant l'alimentation d'une extrudeuse à vis divisée en une zone de chauffage, une zone de plastification et une zone d'homogénéisation, avec un polymère susceptible de se réticuler sous l'action d'un silane hydrolysable non saturé, et avec des additifs en quantité dosée notamment le silane hydrolysable non saturé, ce dernier étant introduit séparément dans l'extrudeuse, un générateur de radicaux libres et un catalyseur de la condensation du silanol, l'élaboration d'une masse homogène par brassage actif des dites matières dans l'extrudeuse, l'extrusion de ladite matière homogénéisée et la réticulation du produit extrudé en présence d'humidité, caractérisé en ce que les additifs comprennent un agent de réduction du taux de cristallisation du polymère et en ce que la réticulation est effectuée dans une atmosphère d'air humide.

2. Procédé selon la revendication 1, caractérisé en ce que l'agent de réduction du taux de cristallisation est l'acétate de vinyle ou un acétate de polyvinyle.

3. Procédé selon la revendication 1, caractérisé en ce que l'agent de réduction du taux de cristallisation est l'acrylate de vinyle ou un acrylate de polyvinyle.

4. Procédé selon la revendication 1, caractérisé en ce que l'agent de réduction du taux de cristallisation est l'acrylate de butyle.

5. Procédé selon la revendication 1, caractérisé en ce que l'atmosphère d'air humide présente un taux d'humidité relative d'au moins 60% et une température d'au moins 20° C.

6. Procédé selon l'une quelconque des revendications 1 à 5, caractérisé en ce que l'agent de réduction du taux de cristallisation est incorporé aux particules du polymère avant l'introduction de celui-ci dans l'extrudeuse à l'état de poudre ou de granulés.

7. Procédé selon l'une quelconque des revendications 1 à 6, caractérisé en ce que l'agent de réduction du taux de cristallisation est introduit dans l'extrudeuse en proportion de 0,5 à 15%, de préférence de 2 à 10%, en poids du polymère.

8. Conducteur électrique pourvu d'un revêtement en matière plastique réticulée obtenu selon le procédé de la revendication 1 ou de l'une quelconque des revendications 2 à 7.

## Patentansprüche

1. Verfahren zur Herstellung eines schlauchförmigen Teils aus vernetztem Kunststoff, insbesondere einer Isolationsumhüllung eines elektrischen Leiters, das die Beschickung eines in eine Heizzone, eine Plastifizierungszone und eine Homogenisierungszone aufgeteilten Schneckenextruders mit einem unter Einwirkung eines hydrolysierbaren, ungesättigten Silans vernetzbaren Polymer und mit Zusatzmitteln in dosierten Mengenanteilen, insbesondere mit dem hydrolysierbaren, ungesättigten Silan, das separat in den Extruder eingeleitet wird, einem Erzeuger von freien Radikalen und einem Katalysator für die Kondensation des Silanols, die Erzeugung einer homogenen Masse durch wirksames Vermischen der genannten Materialien im Extruder, die Extrusion des genannten, homogenisierten Materials und die Vernetzung des extrudierten Produktes in Gegenwart von Feuchtigkeit umfaßt, dadurch gekennzeichnet, daß die Zusatzmittel ein Mittel zur Verminderung des Kristallisationsgrades des Polymers umfassen und daß die Vernetzung in einer Atmosphäre feuchter Luft ausgeführt wird.

2. Verfahren nach Anspruch 1, dadurch gekennzeichnet, daß das Mittel zur Verminderung des Kristallisationsgrades des Polymers Vinylacetat oder ein Acetat von Polyvinyl ist.

3. Verfahren nach Anspruch 1, dadurch gekennzeichnet, daß das Mittel zur Verminderung des Kristallisationsgrades des Polymers Vinylacrylat oder ein Acrylat von Polyvinyl ist.

4. Verfahren nach Anspruch 1, dadurch gekennzeichnet, daß das Mittel zur Verminderung des Kristallisationsgrades des Polymers Butylacrylat ist.

5. Verfahren nach Anspruch 1, dadurch gekennzeichnet, daß die Atmosphäre feuchter Luft eine rel. Feuchtigkeit von mindestens 60% und eine Temperatur von mindestens 20° C aufweist.

6. Verfahren nach einem der Ansprüche 1—5, dadurch gekennzeichnet, daß das Mittel zur Verminderung des Kristallisationsgrades des Polymers in die Teilchen des Polymers eingebracht wird, bevor das Polymer in Form von Pulver oder Granulat in den Extruder eingeleitet wird.

7. Verfahren nach einem der Ansprüche 1—6, dadurch gekennzeichnet, daß das Mittel zur Verminderung des Kristallisationsgrades des Polymers in einem Mengenanteil von 0,5—15 Gew.-%, vorzugsweise 2—10 Gew.-%, bezogen auf das Gewicht des Polymers, in den Extruder eingeleitet wird.

8. Elektrischer Leiter mit einer Umhüllungsschicht aus vernetztem Kunststoff, die nach dem Verfahren nach Anspruch 1 oder einem der Ansprüche 2—7 erhalten wurde.

## Claims

1. A method of producing a tubular element of cross-linked plastic material, particularly an electric conductor insulating covering comprising feeding a screw-extruder divided into a heating zone, a plasticizing zone and a homogenizing zone, with a polymer capable of being cross-linked by the use of a hydrolyzable unsaturated silane, and with additives in metered quantities, particularly the hydrolyzable unsaturated silane, the latter being introduced separatetly into the extruder, a free-radical generator, and a silanol condensation catalyst, preparation of a homogeneous mass by active stirring of the said substances in the extruder, extrusion of the said homogenized material, and cross-linking of the extruded product in the presence of moisture characterized in that the additives include an agent capable of reducing the rate of crystallization of the polymer and in that the cross-linking is carried out in a moist air atmosphere.

2. A method according to claim 1, characterized in that the agent for reducing the rate of crystallization is vinyl acetate or a polyvinyl acetate.

3. A method according to claim 1, characterized in that the agent for reducing the rate of crystallization is vinyl acrylate or a polyvinyl acrylate.

4. A method according to claim 1, characterized in that the agent for reducing the rate of crystallization is butyl acrylate.

5. A method according to claim 1, characterized in that the moist air atmosphere has a relative humidity of at least 60% and a temperature of at least 20%.

6. A method according to any one of the claims 1 to 5, characterized in that the agent for reducing the rate of crystallization is incorporated in the particles of the polymer before the introduction of same into the extruder in the form of powder or pellets.

7. A method according to any one of the claims 1 to 6, characterized in that the agent for reducing the rate of crystallization is introduced into the extruder in a proportion of 0,5% to 15%, preferably 2 to 10%, by weight of the polymer.

8. An electric conductor provided with a covering of cross-linked plastic material obtained according to the method of claim 1 or of any of the claims 2 to 7.